# EUROPEAN PATENT SPECIFICATION

(11) **EP 3 089 910 B1**
(45) Date of publication and mention of the grant of the patent: **02.02.2022**
(21) Application number: 14821862.1
(22) Date of filing: 19.12.2014
(51) Int. Cl.: B64D 11/06

(54) **AIRCRAFT SEAT**
FLUGZEUGSITZ
SIÈGE D'AVION

(30) Priority: 30.12.2013 US 201361921662 P
(43) Date of publication of application: 09.11.2016
(73) Proprietor: Bombardier Inc., Dorval, QC H4S 1Y9 (CA); Short Brothers Plc, Belfast, Antrim BT3 9DZ (GB)
(72) Inventor: ERHEL, Philippe Andre Eugene, Québec H4S 1Y9 (CA); BRICENO, Orlando, Québec H4S 1Y9 (CA)
(74) Representative: HGF
(86) International application number: PCT/IB2014/067162
(87) International publication number: WO 2015/101895

(56) References cited:
- WO-A2-2010/080217
- US-A- 4 040 661
- US-A1- 2002 163 235
- US-A1- 2004 140 705
- US-B2- 6 949 904

## Description

### Field of the Invention

The present invention concerns a vehicle seat. Specifically, the present invention concerns a construction for an aircraft passenger seat.

### Description of the Related Art

There are a wide variety of aircraft seats that have been incorporated into aircraft known in the prior art.

The prior art is replete with seats displaying a wide variety of different features and characteristics.

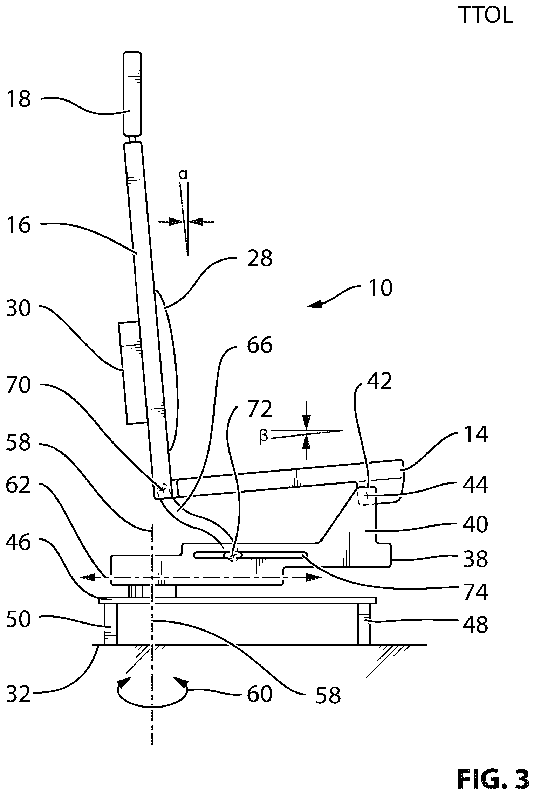

For example, U.S. Patent No. 7,427,102 (hereinafter "the '102 Patent") describes an aircraft seat with various articulation points that permit the seat to be adjusted into a number of different configurations. (The '102 Patent at Fig. 3; *see also* the '102 Patent at col. 6, lines 29-62.)

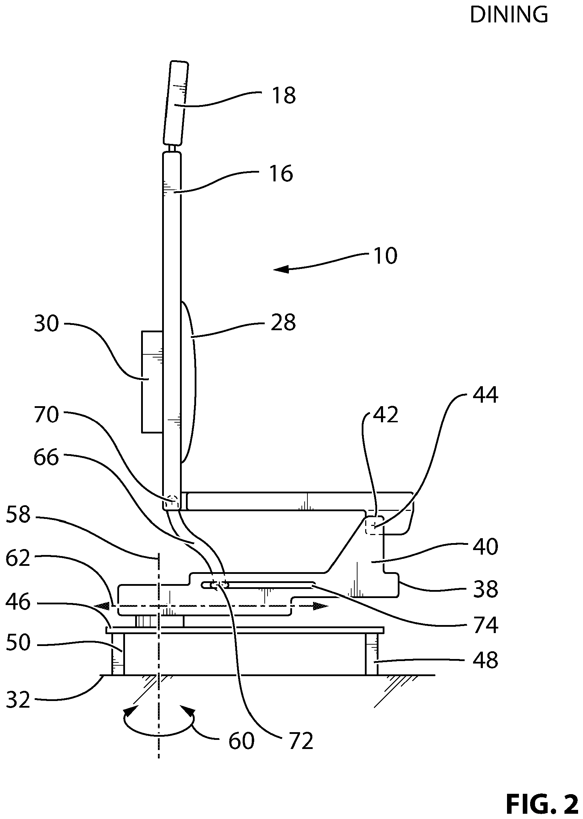

U.S. Patent No. 7,108,326 (hereinafter "the '326 Patent") describes an aircraft seat that reclines by lowering a rear end of the seat while maintaining the front end of the seat at a constant height. (The '326 Patent at Fig. 2A and 2B; *see also* the '326 Patent at col. 4, lines 38-42.)

U.S. Patent No. 6,769,739 (hereinafter "the '739 Patent") describes a seat that is adjustable based on a parallelogram defined by the seat frame. In the prone position, the seat forms an angle of about 15 degrees with respect to the floor of the aircraft. (The '739 Patent at col. 6, lines 12-16.)

U.S. Patent No. 6,402,244 (hereinafter "the '244 Patent") describes a seat for an aircraft that has a single tilt axis 17, beneath the seat, that permits the entirety of the seat to tilt from a vertical position. (The '244 Patent at col. 4, lines 4-6.) The tilt axis is positioned in a range of 30% to 70% of the depth of the seating surface. (The '244 Patent at col. 4, lines 10-15.)

Great Britain Patent No. 2 362 095 (hereinafter "the GB '095 Patent") describes an aircraft seat that may be oriented in a seating position and in a horizontal position. The rear of the seating surface may be lower than a front edge of the seating surface. (The GB '095 Patent at page 12, lines 10-16.)

U.S. Patent Application Publication No. 2009/0195039 (hereinafter "the '039 Application") describes a seat with a number of positions, which are illustrated in Fig. 1 of that patent application.

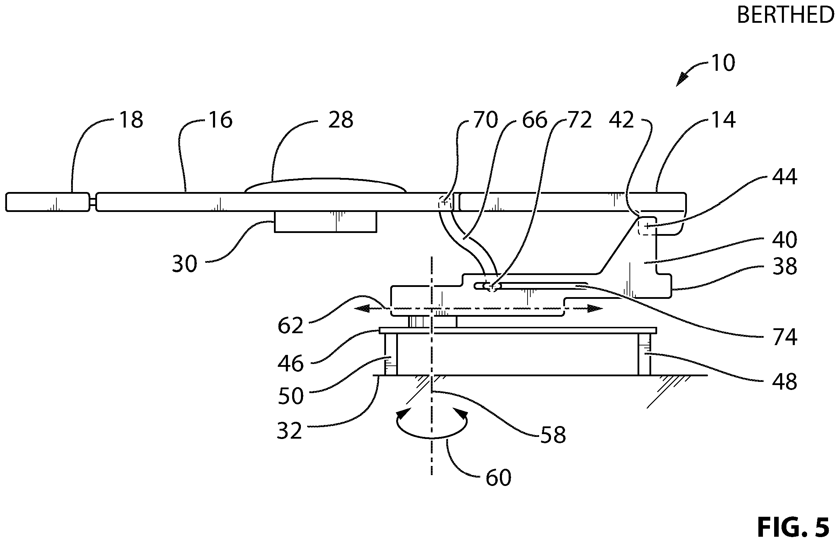

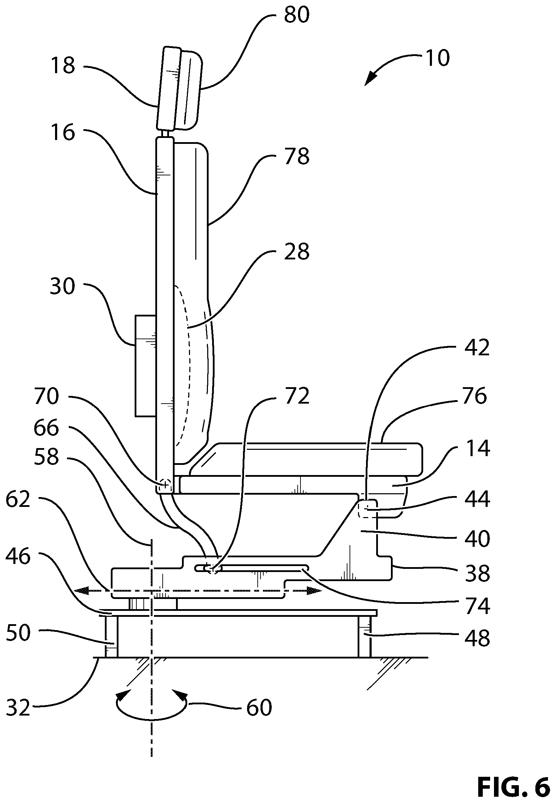

U.S. Patent Application Publication No. 2008/0093502 (hereinafter "the '502 Application") describes an aircraft seat that transitions from a reclined position to a horizontal position. (The '501 Application at Figs. 5 and 6.)

U.S. Patent Application Publication No. 2008/0009958 (hereinafter "the '958 Application") illustrates an aircraft with a number of seats therein, the seats being controllable within a predetermined, limited space within the aircraft.

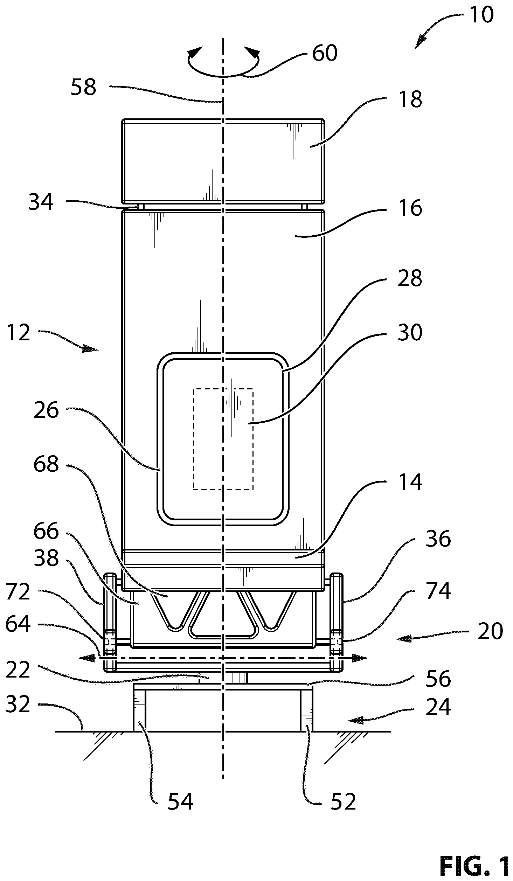

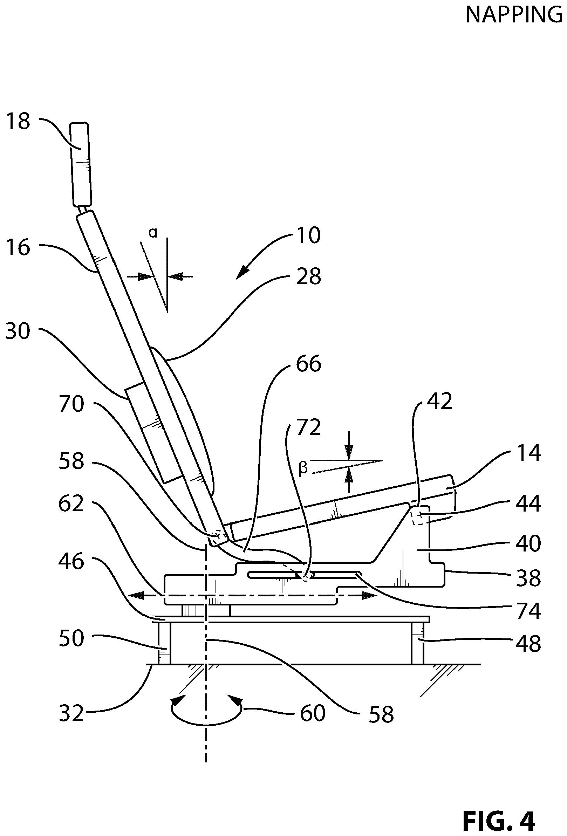

U.S. Patent No 6,808,234 (hereinafter "the '234 Patent") describes a seat that can transition from an upright position to a horizontal position. (The '234 Patent at col. 2, lines 14-22; *see also* the '234 Patent at Figs. 1 and 4.) The armrest is maintained in a position parallel to the surface of the seat. (The '234 Patent at col. 2, lines 5-6.) The armrest lowers as the seat transitions to a horizontal configuration from the upright configuration.

U.S. Patent No. 5,795,025 (hereinafter "the '025 Patent") describes an armrest for a seat that is adjustable in height relative to the adjacent seat.

U.S. Patent Application Publication No. 2003/0085597 (hereinafter "the '597 Application") describes an aircraft seat with a control panel 200 embedded in the armrest. (The '597 Application at paragraph [0022].) The armrest may be raised and lowered via a toggle switch 206. (The '597 Application at paragraph [0026].)

U.S. Patent Application Publication No. 2006/0186715 (hereinafter "the '715 Application") describes a seating unit with a control device in the armrest. (The '715 Application at Fig. 2.) The armrest may be lowered obliquely as the inclination of the backrest increases. (The '715 Application at paragraph [0017].)

U.S Patent Application Publication No. 2008/0018153 (hereinafter "the 153 Application") describes an aircraft seat with variable pre-tension for the backrest portion of the seat. (The '153 Application at paragraph [0005].)

U.S. Patent No. 6,000,755 (hereinafter the '755 Patent") describes an office chair that pivots at a point 43 near to the front of the chair. The seat and backrest are spring-biased (torsion element 44) into an upright position. (The '755 Patent at col. 3, lines 41-55.)

Japanese Patent Publication No. 2003-033243 (hereinafter "JP '243") appears to describe a passenger seat that is adjustable for different passenger sizes by controlling the positioning of the seat plate 7. (JP '243 at the Abstract and translation of the claims.)

U.S. Patent No. 7,108,325 (hereinafter "the '325 Patent") describes a seat construction that includes two sets of parallel rods and a swivel that cooperate to permit both translational and rotational motion for the seat. (The '325 Patent at col. 3, lines 24-29.)

U.S. Patent No. 6,949,904 (hereinafter "the '904 Patent") describes a power actuated seat that provides control over the leg rest, backrest, and lumbar support provided by the seat. (The '904 Patent at col. 4, lines 13-16.)

These patents and patent applications are listed to provide a general context for various aspects of seats known in the prior art. Further examples can be found in U.S. Patent Application Publication No.2004/140705, U.S. Patent Publication No. 4040661, U.S. Patent No. 6949904, PCT Publication No. WO2010/080217 and U.S. Patent Publication No. 2002/163235.

### Summary of the Invention

The present invention seeks to improve upon seats that are known in the prior art by introducing and combining a number of new and unique features, which are detailed in the paragraphs that follow.

It is, therefore, one aspect of the present invention to provide a seat for a vehicle according to claim 1.

It is contemplated that the plurality of positions includes at least a taxi, take-off and landing (TTOL) position and a berthed position.

It is contemplated that the initial degree of back support provided by the back support lattice is set when the seat is in the taxi, take-off and landing (TTOL) position.

It is contemplated that a degree of back support provided by the back support lattice is different for each of the plurality of positions.

It is contemplated that the degree of back support provided by the back support lattice in each of the plurality of positions is adjusted based on the initial degree of back support set by the passenger.

It is contemplated that the back support lattice provides less back support in the berthed position than in the taxi, take-off and landing (TTOL) position.

It is contemplated that the back support lattice provides a bulged configuration that extends outwardly from the seat in the TTOL position.

It is contemplated that the back support lattice changes shape with each of the plurality of positions.

It is contemplated that a back support mechanism progressively adjusts the curvature of the back support lattice and thereby changes the degree of back support provided by the back support lattice as an angle between the backrest and seat pan changes.

In one contemplated embodiment, the seat may also include a headrest, having a headrest top edge and a headrest bottom edge, wherein the headrest bottom edge is disposed adjacent to the backrest top edge.

In a further contemplated embodiment, the seat may include a swivel supporting the undercarriage, and a track frame supporting the swivel. The swivel may permit the undercarriage to rotate with respect to the track frame.

The seat of the present invention contemplates a plurality of positions, further including a dining position and a nap position.

In one embodiment, the back support lattice is incorporated into the backrest. In this embodiment, the back support lattice may extend through an opening in the backrest, the back support lattice being adjustable depending upon one of the plurality of positions.

With respect to the dining position, it is contemplated that, with respect to a floor on which the seat is to be disposed, the backrest may be at an angle of about 90° ± 5° with respect to the floor, and the seat pan may be at an angle of about 0° ± 5° with respect to the floor. With respect to the TTOL position, it is contemplated that, with respect to a floor on which the seat is to be disposed, the backrest may be at an angle of about 70° ± 5° with respect to the floor and the seat pan may be at an angle of about -5° ± 5° with respect to the floor.

With respect to the napping position, with respect to a floor on which the seat is to be disposed, the backrest may be at an angle of about 46° ± 5° with respect to the floor and the seat pan may be at an angle of about -15° ± 5° with respect to the floor. With respect to the berthed position, with respect to a floor on which the seat is to be disposed, the backrest may be at an angle of about 0° ± 5° with respect to the floor and the seat pan may be at an angle of about 0° ± 5° with respect to the floor.

Still further aspects of the present invention will be made apparent from the discussion provided below.

### Brief Description of the Drawings

The present invention will now be described in connection with the drawings appended hereto, in which:
Fig. 1 is a graphical, front view of one contemplated embodiment of the aircraft seat of the present invention;
Fig. 2 is a graphical, side view of the aircraft seat illustrated in Fig. 1, showing the aircraft seat in a first position, also referred to as a "dining" position;
Fig. 3 is a graphical, side view of the aircraft seat illustrated in Fig. 1, showing the aircraft seat in a second position, also referred to as a "taxi, take-off, and landing" (or "TTOL") position;
Fig. 4 is a graphical, side view of the aircraft seat illustrated in Fig. 1, showing the aircraft seat in a third position, also referred to as a "napping" position;
Fig. 5 is a graphical, side view of the aircraft seat illustrated in Fig. 1, showing the aircraft seat in a fourth position, also referred to as a "berthed" position;
Fig. 6 is a graphical, side view of the aircraft seat illustrated in Fig. 2, where cushions are added to the frame of the aircraft seat; and
Fig. 7 is a graphical, perspective representation of a tilt link element forming a part of the aircraft seat illustrated in Figs. 1-6.

### Detailed Description of Embodiment(s) of the Invention

The present invention will now be described in connection with one or more contemplated embodiments. The embodiments that are described are intended to be exemplary of the present invention and not limiting of the scope thereof. In other words, while attention is focused on specific embodiments of the present invention, those embodiments are not intended to limit the present invention. To the contrary, the examples provided below are intended to illustrate the broad scope of the present invention which is defined by the appended claims.

In the paragraphs that follow, the present invention will be described in connection with an aircraft seat 10. While the details of the aircraft seat 10 of the present invention are discussed in connection with the use of the seat 10 in an aircraft, it is contemplated that the seat 10 of the present invention may be employed in any number of suitable environments without departing from the scope of the present invention. For example, the seat 10 of the present invention may be used on a boat, bus, recreational vehicle, or train, among other contemplated vehicles and environments.

In addition, the discussion that follows may identify specific materials from which one or more parts of the aircraft seat 10 may be constructed. Any identification of a specific material is intended to be exemplary of the types of materials that may be employed to construct the present invention. As such, any discussion of specific materials is not intended to be limiting of the present invention.

Before discussing aspects of the seat 10 of the present invention, the figures depicting the seat are provided in graphical format to illustrate breadth of the present invention. Numerous embodiments and variations are contemplated for the seat 10 based on the graphical representations appended hereto. The seat 10 of the present invention, therefore, is contemplated to encompass a large number of implementations associated with the broad concepts described herein.

With respect to the seat 10, there are a number of different aspects and features that are considered to be a part of the present invention. The specific features and aspects may be combined together or used singly on a seat 10 without departing from the scope of the present invention. In other words, the seat 10 of the present invention need not incorporate all of the features described herein.

With respect to aircraft, there are a number of different aircraft types that are known in the art. For example, there are commercial aircraft, with which the public is generally familiar. In addition, there are genres of business and private aircraft that are designed for private use, for charter use, or for hire operations.

The seat 10 of the present invention has been designed and sized for use on business, private, charter, and for-hire aircraft. While designed with business, private, charter, and for-hire aircraft in mind, the seat 10 may be sized for any type of aircraft, including commercial aircraft, without departing from the scope of the present invention.

With reference to Fig. 1, selected aspects of the frame 12 of the aircraft seat 10 are illustrated. The aircraft seat 10 includes a seat pan 14, a backrest 16, a headrest 18, an undercarriage 20, a swivel 22, and a track frame 24.

As illustrated, the backrest 16 is disposed adjacent to the seat pan 14 such that a bottom edge of the backrest 16 is disposed adjacent to a rear edge of the seat pan 14. The headrest 18 includes a bottom edge that is disposed adjacent to the top edge of the backrest 16. In the illustrated embodiment, the seat pan 14, the backrest 16, and the headrest 18 are illustrated as generally rectangular, planar components of the seat 10. As should be apparent to those skilled in the art, however, the components may have any suitable shape and outline without departing from the scope of the present invention. In other words, the seat 10 is not limited to components with the shape and/or outline of components illustrated in Fig. 1 or any of the remaining figures.

It is noted that the various components making up the seat 10 of the present invention are contemplated to be made from aluminum or alloys of aluminum. As should be apparent to those skilled in the art, aluminum and its alloys are both strong and light weight. It is noted that the seat 10 of the present invention need not rely on aluminum and its alloys for the construction of the frame 12. Other materials may be employed without departing from the scope of the present invention. Alternative materials include, but are not limited to, iron and its alloys, magnesium and its alloys, beryllium and its alloys, polymers, plastics, thermoplastics, composite materials *(i.e.,* carbon fiber composites), ceramics, natural materials (*i.e*., wood), and the like.

With continued reference to Fig. 1, the undercarriage 20 is contemplated to encompass components that are supported by the swivel 22. The track frame 24 is contemplated to encompass those components that support the swivel 22 and, therefore, the undercarriage 20, seat pan 14, backrest 16, and headrest 18. As should be apparent, the division of the seat 10 into the enumerated components is not intended to be limiting of the present invention. To the contrary, this naming convention has been adopted to facilitate discussion of the seat 10 herein.

The seat pan 14 is contemplated to be a planar, rectangular structure. The seat pan 14 may be a solid structure. Alternatively, the seat pan 14 may include a frame with an opening therein, the opening having a flexible lattice disposed therein to provide additional comfort to the occupant of the seat 10. In a further contemplated embodiment, the seat pan 14 may be a frame with an opening with sinusoidally-shaped springs extending across the opening to provide additional comfort to the occupant.

As illustrated in Fig. 1, the backrest 16 includes an opening 26. An adjustable lumbar support lattice 28 is positioned within the opening 26. The lumbar support lattice 28 provides lumbar support to an occupant of the seat 10. As discussed below, the lumbar support lattice 28 is contemplated to be connected to one or more components of the seat 10 so that changes in the position of the seat 10 automatically cause an adjustment of the magnitude (or degree) of support provided by the lumbar support lattice 28.

A lumbar support adjustment mechanism 30 is provided on the seat 10 to adjust the degree (or magnitude) of lumbar support provided by the lumbar support lattice 28. In the illustrated embodiment, the lumbar support mechanism 30 is disposed at the seat of the seat 10, behind the lumbar support lattice 28. The position of the lumber support mechanism 30 has been selected merely to illustrate one possible position therefor. The lumbar support mechanism may be placed at any location on or near the seat 10 without departing from the scope of the present invention. Separately, it is contemplated that portions of the lumbar support mechanism 30 may be located at a location far from the seat 10.

With respect to the lumbar support lattice 28 and the lumbar support mechanism 30, it is noted that the lumbar support lattice 28 and the lumbar support mechanism 30 may provide support to more than just the lumbar region on the passenger's back. Accordingly, for purposes of the description that follows the terms "back support lattice 28" and "back support mechanism 30" will be employed so as not to limit the scope of the present invention.

In addition, while the various figures depict a single back support lattice 28 and a single back support mechanism 30, the seat 10 of the present invention is not limited only to this arrangement of components. It is contemplated that several back support lattices 28 and several back support mechanisms 30 may be employed on the seat 10 without departing from the scope of the present invention. Multiple back support lattices 28 and multiple back support mechanisms 30 may be employed to provide back support that is more finely adjusted for passenger comfort in some instances, as should be apparent to those skilled in the art.

Before discussing the operation of the back support lattice 28 and back support mechanism 30 in greater detail, reference is made to Figs. 2-5. Each of these figures illustrate four contemplated positions for the seat 10 of the present invention. In each illustration, as discussed more fully below, the back support lattice 28 and the back support mechanism 30 apply a different magnitude of back support for the occupant of the seat 10.

Fig. 2 illustrates what is referred to as the dining position (or dining orientation) of the seat 10. In the dining position, the backrest 16 is at substantially a vertical orientation and the seat pan 14 is at a substantially horizontal orientation with respect to the floor 32 of the aircraft to which the seat 10 is affixed. While the dining position is contemplated to be used for meal service, this position may be utilized for other functions *(i.e.,* providing a position suitable for working in the aircraft cabin). Accordingly, this position of the seat 10 should not be understood to be limited solely to dining activities.

The dining position of the seat contemplates that the backrest 16 will be at a vertical orientation with respect to the floor 32 of the cabin of the aircraft, which also serves as a horizontal reference line for purposes of the instant description of the seat 10 of the present invention. In other words, the backrest 16 is contemplated to be at an angle of about 0° with respect to a vertical line perpendicular to the plane of the floor 32 (or 90° with respect to the floor 32). The seat pan 14 in the dining position is contemplated to be parallel (or substantially parallel to the floor 32). In other words, the seat pan is contemplated to be at an angle of about 0° with respect to the floor 32 when the seat 10 is in the dining position. In one contemplated embodiment of the seat 10 in the dining position, the backrest 16 may be at an angle of about 0° ± 5° and the seat pan 14 may be at an angle of about 0° ± 5°. In still another contemplated embodiment, the backrest 16 may be at an angle of about 0° ± 3° and the seat pan 14 may be at an angle of about 0° ± 3°.

Fig. 3 illustrates what is referred to as the taxi, take-off, and landing (or "TTOL") position for the seat 10. In the TTOL position, the backrest 16 also is in a nearly vertical position and the seat pan 14 is in a nearly horizontal position with respect to the floor 32 of the aircraft. As should be apparent, the dining position of the seat 10 places the seat 10 in a slightly more erect position than the TTOL position. It is contemplated that the dining position will, therefore, present a more suitable orientation for the seat 10 to permit an occupant to access food items placed on a table or tray in front of the seat 10.

In the TTOL position, the backrest 16 is contemplated to be at an angle α of about 20° with respect to the vertical line perpendicular to the floor 32 (or about 70° with respect to the floor 32). The seat pan 14 in the TTOL position is contemplated to be at an angle β of about -5° with respect to the floor 32. In one contemplated embodiment of the seat 10 in the TTOL position, the backrest 16 may be at an angle α of about 20° ± 5° and the seat pan 14 may be at an angle β of about -5° ± 5°. In still another contemplated embodiment, the backrest 16 may be at an angle α of about 20° ± 3° and the seat pan 14 may be at an angle β of about -5° ± 3°.

Fig. 4 illustrates what is referred to as the napping (or nap) position for the seat 10. In the napping position, the backrest 16 is disposed at an angle from vertical. Specifically, the angle is approximately 45° from vertical. Similarly, the seat pan 14 is disposed about 45° from horizontal, with the front edge of the seat 10 being disposed at a position higher (in relation to the floor) than the rear edge of the seat 14. The napping position is considered to be a relaxed position that may be employed by the occupant wishing to take a nap, enjoy in-flight entertainment, or the like.

In the napping position, the backrest 16 is contemplated to be at an angle α of about 44° with respect to the vertical line perpendicular to the horizontal the floor 32 (or about 46° with respect to the floor 32). The seat pan 14 in the TTOL position is contemplated to be at an angle β of about -15° with respect to the floor 32. In one contemplated embodiment of the seat 10 in the TTOL position, the backrest 16 may be at an angle α of about 44° ± 5° and the seat pan 14 may be at an angle β of about -15° ± 5°. In still another contemplated embodiment, the backrest 16 may be at an angle α of about 44° ± 3° and the seat pan 14 may be at an angle β of about -15° ± 3°.

Fig. 5 illustrates what is referred to as the berthed (or berth) position for the seat 10. In this orientation, the backrest 16 and the seat pan 14 are both substantially parallel to the floor 32 of the aircraft. As such, the backrest 16 and the seat pan 14 establish a bed-like structure to support the passenger therein.

In the berthed position, the backrest 16 is contemplated to be at an angle of about 90° with respect to a vertical line perpendicular to the plane of the floor 32 (or 0° with respect to the floor 32). The seat pan 14 in the napping position is contemplated to be parallel (or substantially parallel to the floor 32). In other words, the seat pan is contemplated to be at an angle of about 0° with respect to the floor 32 when the seat 10 is in the napping position. In one contemplated embodiment of the seat 10 in the dining position, the backrest 16 may be at an angle of about 90° ± 5° and the seat pan 14 may be at an angle of about 0° ± 5°. In still another contemplated embodiment, the backrest 16 may be at an angle of about 90° ± 3° and the seat pan 14 may be at an angle of about 0° ± 3°. As should be apparent, in the berthed position, both the backrest 16 and the seat pan 14 are contemplated to be substantially parallel to the floor 32.

While it is contemplated that the seat 10 will be configurable in the four positions illustrated in Figs. 2-5, it is noted that the seat 10 of the present invention is not limited solely to four discrete positions. To the contrary, the seat 10 may present a smaller or a larger number of discrete positions without departing from the scope of the present invention. Separately, it is contemplated that the seat 10 may be positionable in an infinite number of positions between the dining position and the berthed position.

In each of the embodiments illustrated in Figs. 2-4, it is contemplated that the seat 10 also will include a leg rest that extends forwardly from the front edge of the seat pan 14. Since the leg rest is not critical to the present invention, it has been omitted to simplify the drawings.

Returning to Fig. 1, the back support lattice 28 is contemplated to be connected to the seat 10 in a manner such that the lattice 28 bulges outwardly, toward the center of the seat pan 14, when the seat 10 is in the dining position (Fig. 2), the TTOL position (Fig. 3), and the napping position (Fig. 4). When the seat 10 is in a berthed orientation (Fig. 5), the back support lattice 28 lies flat (or substantially flat) in relation to the surface of the backrest so that the backrest 16 presents a suitable, bed-like surface to an occupant of the seat 10.

In particular, it is contemplated that the back support lattice 28 will present a bulged configuration that changes with each of the seat positions. In the dining position, the lattice 28 is contemplated to provide a maximal bulge so that the backrest 16 provides maximal back support when the seat 10 is in the most erect position contemplated therefor. When the seat 10 is oriented in the TTOL position, it is contemplated that the lattice 28 will provide slightly less back support *(i.e.,* will present a slightly less pronounced bulge) by comparison with the dining position. In the nap position, the lattice 28 is contemplated to provide even less back support than the TTOL position. In the berthed position, the lattice 28 is contemplated to provide little or no back support.

With respect to the differing degrees of back support, it is noted that the lattice 28 may have a single shaped configuration or a configuration that changes in shape depending upon the position of the seat 10. In the embodiment illustrated in Figs. 1-6, the back support lattice 28 is shown as a bulged surface. It is noted, however, that the back support lattice 28 may have any shape. Moreover, the lattice 28 may alter its shape depending upon the position of the seat 10 as it transitions from the dining position to the berthed position.

With respect to the back support lattice 28, it is contemplated that the lattice 28 will be operably connected to the seat 10 in a manner such that operation of the seat 10 automatically adjusts the degree of curvature of the lattice 28 (and/or the shape of the lattice 28). In other words, to maximize comfort to the occupant, the back support provided by the lattice 28 is contemplated to automatically adjust based on the configuration of the seat 10.

Adjustment of the back support lattice 28 may be accomplished by any suitable means, as should be understood by those skilled in the art. For example, the lattice may be connected between the seat pan 14 and the backrest 16 by the back support mechanism 30. As the angle between the backrest 16 and the seat pan 14 increases, the back support mechanism 30 progressively adjusts the curvature of the lattice 28 and, thereby, changes the degree (or magnitude) of back support provided by the lattice 28. Alternatively, the lattice 28 may be connected to the seat 10 via a cable that exerts maximum force on the lattice 28 when the seat 10 is in the dining position and minimal (or zero) force on the lattice 28 when the seat 10 is reconfigured to the berthed orientation. In further contemplated embodiments, the lattice 28 may be connected electromechanically or pneumatically to one or more components of the seat 10 to adjust the degree of back support as the seat 10 transitions from the dining position to the berthed position.

As noted, Fig. 1 includes a graphical representation of the back support mechanism 30 that is contemplated to be connected between the lattice 28 and one or more components of the seat 10. As noted, the precise mechanism contemplated for the back support mechanism 30 is not critical to the operation of the seat 10.

In connection with the back support provided by the lattice 28 and the back support mechanism 30, the orientation of the seat pan 14 and the backrest 16 are contemplated to provide input for control over the degree of back support. In particular, the angular relationship between the seat pan 14 and the backrest 16 may be used to determine the degree of back support provided by the lattice 28. The lattice 28 and the back support mechanism 30 may be operatively connected to any of a number of the components of the seat 10, each of which provide input for control over the back support provided by the lattice 28 and the associated back support mechanism 30.

With regard to the lumbar support provided by the back support lattice 28, it is also contemplated that the passenger has independent control over the degree of back support provided by the lattice 28. As such, it is contemplated that the passenger may adjust the degree of back support provided by the lattice 28 (via one or more controls) when the seat 10 is in the TTOL position (or any other position, for that matter). The seat 10 then automatically adjusts the degree of lumber support based on the initial setting (or any intermediate setting) selected by the passenger. In other words, one or more set points for the automatic adjustment of the lattice 28 may be altered by the passenger. Separately, it is contemplated that the automatic adjustment feature may be disabled. Still further, the passenger may be provided with complete control over his or her comfort by having total control over the back support in the seat 10 independent of the position of the seat 10.

In connection with the seat 10, it is contemplated that the seat 10 may include a left armrest and a right armrest (not shown). The armrests are contemplated to adjust automatically when the seat 10 is reoriented in any of the seating positions contemplated for the seat 10. Specifically, the height of the armrests with respect to the seat pan 14 is contemplated to change depending upon the seat position. This is contemplated to provide suitable comfort for the occupant of the seat 10 in any of its positional orientations.

The headrest 18 connects to the backrest 16 via a headrest support, which may include one or more support bars 34 (which are shown only in Fig. 1, to simplify the remaining figures). The position of the headrest 18 with respect to the backrest 16, using the support bar(s) 34, may be adjusted manually, electromechanically, pneumatically, or via any other suitable means as should be apparent to those skilled in the art.

As noted above, the seat 10 includes an undercarriage 20. In the illustrated embodiment, the undercarriage 20 includes left and right side plates 36, 38. As shown in Figs, 2-6, each of the side plates 36, 38 include triangularly-shaped protrusions 40 at a front end thereof. The apexes of the protrusions 42 establish a pivot point 44 for pivotal connection between the side plates 36, 38 and the seat pan 14. The seat 10, therefore, pivots around the pivot 44, as illustrated in Figs. 2-6. If armrests are provided, it is contemplated that the armrests will share the same pivot point 44 at their front ends.

The track frame 24 of the seat 10 includes one or more rails 46 that are supported by front and rear legs 48, 50. The front and rear legs 48, 50 connect to the floor 32 of the cabin of the aircraft via connectors, which are known to those skilled in the art. As illustrated in Fig. 1, the front and rear legs 48, 50 are contemplated to include left and right legs elements 52, 54. One or more cross-rails 56 connect to the rails 46 to support the swivel 22. The cross-rails 56 connect to the rails 46.

As indicated throughout the drawings, the swivel 22 permits the seat 10 to pivot around the centerline 58 in the direction of the arrows 60. By positioning the swivel on the cross-rails 56 and connecting the cross-rails 56 to the rails 46, the swivel 22 may be moved in a forward or a rear direction, as indicated by the arrows 62. The swivel 22 may be connected to the cross-rails 56 such that the swivel 22 is provided with lateral movability in the direction of the arrows 64, shown in Fig. 1.

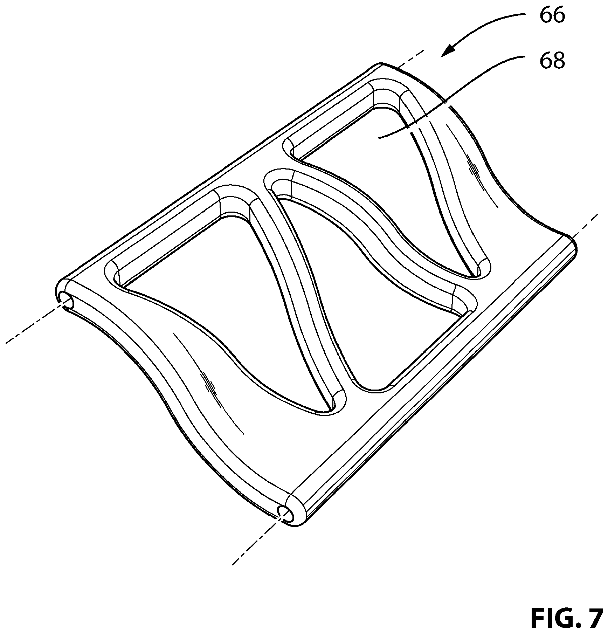

Fig. 1 also illustrates a further feature of the seat 10 of the present invention. Specifically, a tilt link 66 connects between the seat pan 14 and backrest 16 and the side plates 36, 38. The tilt link 66 is an S-curved plate (from the side view) with a number of holes 68 fashioned therein to create a web-like structure. A perspective, graphical representation of the tilt link 66 is provided in Fig. 7.

At its top end, the tilt link 66 connects to the bottom end of the backrest 16 and the rear end of the seat pan 14 at a pivot point 70. The tilt link 66 may be connect at the pivot 70 or a position adjacent thereto. At its bottom end, the tilt link 66 connects to a carriage 72 slidably disposed within a track 74 in each of the side plates 36, 38.

The bottom end of the tilt link 68 travels in the tracks 74 via the carriages 72. As illustrated in Figs. 2-5, as the bottom end of the tilt link 68 moves in the direction of the arrows 62 toward the forward or rearward ends of the tracks 74, the tilt link 68 pivots upwardly or downwardly together with the rear end of the seat pan 14 and the bottom end of the backrest 16. In particular, as the bottom end of the tilt link 66 travels toward the front end of the seat 10, the tilt link 66 transitions to a more horizontal orientation. At the same time, the rear end of the seat pan 14 moves closer to the floor 32 of the aircraft. In other words, the angular displacement of the seat pan 14 increases with respect to the floor 32 as the bottom end of the tilt link 66 moves toward the front end of the track 74. Also, as the bottom end of the tilt link 66 moves toward the rear end of the track 74, the tilt link 66 assumes a more vertical orientation, which is illustrated in Fig. 1. At the same time, the rear end of the seat pan 14 moves away from the floor 32, resulting in a horizontal (or nearly horizontal) orientation of the seat pan 14 with respect to the floor 32 of the aircraft.

It is contemplated that the tilt link 66 may be connected to a spring or damper to assist with the movement of the tilt link 66. In particular, it is contemplated that a damper or spring may assist by slowing the movement of the seat 10 as it transitions from the dining position to the napping position.

Figs. 2-5 are graphical, side views of the seat 10 illustrated in Fig. 1. In these side views, the juxtaposition of various components forming the frame 12 of the seat 10 are more readily visible than in Fig. 1. In particular, the location of the tilt link 66 is more readily visible. In addition, the S-shape of the tilt link 66 is more easily understood.

As should be apparent, the track frame 24 is affixed to tracks in the floor 32 of the cabin of the aircraft. The track frame 24, therefore, is not movable with respect to the floor 32. The track frame 24 remains fixed in the location where the seat 10 is placed at the time that the interior of the aircraft is assembled. While it is noted that the seat 10 may be moved to different locations on the tracks in the cabin, moving the seat 10 to a different location on the tracks requires specialized tools and training. It is not an operation that may be performed (as a general rule) by an occupant of the aircraft.

Despite the fixed location of the track frame 24, it is contemplated that the occupant of the seat 10 may wish to relocate the seat 10 within the cabin. For example, the occupant may wish to turn the seat 10 on a rotational axis, as indicated by the arrows 60, which illustrate rotational motion around a centerline 58 of the swivel 22. Separately, the occupant may wish to alter the location of the seat 10 in a forward and/or rearward direction. If so, it is contemplated that the occupant may move the seat 10 in the direction of the arrows 62, along the rails 46. As noted above, and as illustrated in Fig. 1, the passenger also may be permitted to move the seat laterally along the direction of the arrows 64.

Fig. 6 is a graphical, side view of the seat 10 in the dining orientation, as illustrated in Fig. 2. In this view, cushions have been added to the seat 10. In particular, a seat cushion 76 is shown in the seat pan 14. A backrest cushion 78 has been added to the backrest 16. In addition, a headrest cushion 80 has been added to the headrest 18. As should be apparent to those skilled in the art, the seat 10 is likely to be provided with numerous cushions, fairings, and embellishments that are appropriate for the interior of the aircraft. The cushions 76, 78, 80 are added to the seat in Fig. 6 merely for purposes of illustration.

Fig. 7 provides a graphical, perspective illustration of the tilt link 66 described in connection with the seat 10 illustrated in Figs. 1-6. The holes 68 in the tilt link 66 are merely illustrative of the types of holes that may be incorporated into the tilt link 66. As should be apparent to those skilled in the art, the holes 68 may be formed in any shape and be any size that may be required or desired. The exact configuration of the holes 68 is not critical to the operation or construction of the seat 10 of the present invention. As may be apparent, the holes 68 are provided to reduce the overall weight of the tilt link 66. In one contemplated embodiment of the present invention, the tilt link 66 may not include any holes 68 at all.

As noted above, the present invention encompasses a broad scope as defined by the appended claims.

## Claims

1. A seat (10) for a vehicle, comprising:
a seat pan (14), having a seat pan front edge and a seat pan rear edge;
a backrest (16), having a backrest top edge and a backrest bottom edge, wherein the backrest bottom edge is articulately disposed adjacent to the seat pan rear edge, and at least one of the seat pan (14) and the backrest (16) is configurable into a plurality of positions;
an undercarriage (20) supporting the seat pan (14), the undercarriage (20) comprising spaced-apart left and right lateral brackets;
and
a back support lattice (28) disposed adjacent to the backrest (16) for providing back support,
a control operable by a passenger of the seat (10) for setting an initial degree of back support provided by the back support lattice (28);
wherein the back support lattice (28) is operatively connected to at least one of the seat pan (14) and the backrest (16), and
wherein the back support provided by the back support lattice (28) is automatically adjustable from the initial degree of back support depending on the plurality of positions,
**characterized in that** the seat (10) further comprises a tilt link (66) operably connected, at a tilt link top end, to at least one of the backrest (16) and the seat pan (14) and, at a tilt link bottom end, to the undercarriage (20), wherein the tilt link (66) is a S-shaped plate from a side view between the tilt link top end and the tilt link bottom end.

2. The seat (10) of claim 1, wherein the plurality of positions includes at least a taxi, take-off and landing (TTOL) position and a berthed position.

3. The seat (10) of claim 2, wherein the initial degree of back support provided by the back support lattice (28) is set when the seat (10) is in the taxi, take-off and landing (TTOL) position.

4. The seat (10) of claim 1, wherein a degree of back support provided by the back support lattice (28) is different for each of the plurality of positions.

5. The seat (10) of claim 4, wherein the degree of back support provided by the back support lattice (28) in each of the plurality of positions is adjusted based on the initial degree of back support set by the passenger.

6. The seat (10) of claim 2, wherein the back support lattice (28) provides less back support in the berthed position than in the taxi, take-off and landing (TTOL) position.

7. The seat (10) of claim 2, wherein the back support lattice (28) provides a bulged configuration that extends outwardly from the seat (10) in the TTOL position.

8. The seat (10) of claim 7, wherein the back support lattice (28) changes shape with each of the plurality of positions.

9. The seat (10) of claim 4, wherein a back support mechanism (30) progressively adjusts the curvature of the back support lattice (28) and thereby changes the degree of back support provided by the back support lattice (28) as an angle between the backrest (16) and seat pan (14) changes.

10. The seat (10) of claim 1, further comprising:
a headrest (18), having a headrest top edge and a headrest bottom edge, wherein the headrest bottom edge is disposed adjacent to the backrest top edge.

11. The seat (10) of claim 1, further comprising:
a swivel (22) supporting the undercarriage (20); and
a track frame (24) supporting the swivel (22),
wherein the swivel (22) permits the undercarriage (20) to rotate with respect to the track frame (24).

12. The seat (10) of claim 2, wherein the plurality of positions further include a dining position and a napping position.

13. The seat (10) of claim 1, wherein the back support lattice (28) is incorporated into the backrest (16).

14. The seat (10) of claim 13, wherein the back support lattice (28) extends through an opening in the backrest (16), the back support lattice (28) being adjustable depending upon one of the plurality of positions.

15. The seat (10) of claim 12, wherein, in the dining position, with respect to a floor (32) on which the seat (10) is to be disposed:
the backrest (16) is at an angle of about 90° ± 5° with respect to the floor (32), and
the seat pan (14) is at an angle of about 0° ± 5° with respect to the floor (32).

16. The seat (10) of claim 2, wherein, in the TTOL position, with respect to a floor (32) on which the seat (10) is to be disposed:
the backrest (16) is at an angle of about 70° ± 5° with respect to the floor (32), and
the seat pan (14) is at an angle of about -5° ± 5° with respect to the floor (32).

17. The seat (10) of claim 12, wherein, in the napping position, with respect to a floor (32) on which the seat (10) is to be disposed:
the backrest (16) is at an angle of about 46° ± 5° with respect to the floor (32), and
the seat pan (14) is at an angle of about -15° ± 5° with respect to the floor (32).

18. The seat (10) of claim 2, wherein, in the berthed position, with respect to a floor (32) on which the seat (10) is to be disposed:
the backrest (16) is at an angle of about 0° ± 5° with respect to the floor (32), and
the seat pan (14) is at an angle of about 0° ± 5° with respect to the floor (32).

## Patentansprüche

1. Sitz (10) für ein Fahrzeug, umfassend:
eine Sitzfläche (14) mit einer Sitzflächenvorderkante und einer Sitzflächenhinterkante;
eine Rückenlehne (16) mit einer Rückenlehnenoberkante und einer Rückenlehnenunterkante, wobei die Rückenlehnenunterkante gelenkig benachbart zu der Sitzflächenhinterkante angeordnet ist, und mindestens eine von der Sitzfläche (14) und der Rückenlehne (16) zu einer Vielzahl von Positionen konfigurierbar ist;
einen Unterbau (20), der die Sitzfläche (14) trägt, wobei der Unterbau (20) beabstandete linke und rechte seitliche Halterungen umfasst;
und
ein Rückenstützgitter (28), das neben der Rückenlehne (16) angeordnet ist, um eine Rückenstütze bereitzustellen,
eine von einem Passagier des Sitzes (10) betätigbare Steuerung zum Einstellen eines Anfangsgrades der Rückenstütze, die durch das Rückenstützgitter (28) bereitgestellt wird;
wobei das Rückenstützgitter (28) mit mindestens einer von der Sitzfläche (14) und der Rückenlehne (16) wirkverbunden ist, und
wobei die durch das Rückenstützgitter (28) bereitgestellte Rückenstütze abhängig von der Vielzahl von Positionen automatisch vom Anfangsgrad der Rückenstütze verstellbar ist,
**dadurch gekennzeichnet, dass** der Sitz (10) ferner eine Kippverbindung (66) umfasst, die an einem oberen Ende der Kippverbindung mit mindestens einer von der Rückenlehne (16) und der Sitzfläche (14) und an einem unteren Ende der Kippverbindung mit dem Unterbau (20) betriebsmäßig verbunden ist, wobei die Kippverbindung (66) aus einer Seitenansicht zwischen dem oberen Ende der Kippverbindung und dem unteren Ende der Kippverbindung eine S-förmige Platte ist.

2. Sitz (10) nach Anspruch 1, wobei die Vielzahl von Positionen mindestens eine Roll-, Start- und Lande(TTOL)-Position und eine Liegeposition einschließt.

3. Sitz (10) nach Anspruch 2, wobei der Anfangsgrad der Rückenstütze, die durch das Rückenstützgitter (28) bereitgestellt wird, eingestellt wird, wenn sich der Sitz (10) in der Roll-, Start- und Lande(TTOL)-Position befindet.

4. Sitz (10) nach Anspruch 1, wobei ein Grad der Rückenstütze, die durch das Rückenstützgitter (28) bereitgestellt wird, für jede der Vielzahl von Positionen unterschiedlich ist.

5. Sitz (10) nach Anspruch 4, wobei der Grad der Rückenstütze, die durch das Rückenstützgitter (28) bereitgestellt wird, in jeder der Vielzahl von Positionen auf Grundlage des Anfangsgrads der Rückenstütze verstellt wird, der von dem Passagier eingestellt wird.

6. Sitz (10) nach Anspruch 2, wobei das Rückenstützgitter (28) in der Liegeposition weniger Rückenstütze bereitstellt als in der Roll-, Start- und Lande(TTOL)-Position.

7. Sitz (10) nach Anspruch 2, wobei das Rückenstützgitter (28) eine ausgebauchte Konfiguration bereitstellt, die sich von dem Sitz (10) in der TTOL-Position nach außen erstreckt.

8. Sitz (10) nach Anspruch 7, wobei das Rückenstützgitter (28) mit jeder der Vielzahl von Positionen seine Form ändert.

9. Sitz (10) nach Anspruch 4, wobei ein Rückenstützmechanismus (30) die Krümmung des Rückenstützgitters (28) schrittweise verstellt und dadurch den Grad der durch das Rückenstützgitter (28) bereitgestellten Rückenstütze ändert, als sich ein Winkel zwischen der Rückenlehne (16) und der Sitzfläche (14) ändert.

10. Sitz (10) nach Anspruch 1, ferner umfassend:
eine Kopfstütze (18), die eine Kopfstützenoberkante und eine Kopfstützenunterkante aufweist, wobei die Kopfstützenunterkante neben der Rückenlehnenoberkante angeordnet ist.

11. Sitz (10) nach Anspruch 1, ferner umfassend:
ein Drehgelenk (22), das den Unterbau (20) trägt; und
einen Schienenrahmen (24), der das Drehgelenk (22) trägt,
wobei das Drehgelenk (22) ermöglicht, dass sich der Unterbau (20) in Bezug auf den Schienenrahmen (24) dreht.

12. Sitz (10) nach Anspruch 2, wobei die Vielzahl von Positionen ferner eine Essposition und eine Schlafposition einschließt.

13. Sitz (10) nach Anspruch 1, wobei das Rückenstützgitter (28) in die Rückenlehne (16) eingebaut ist.

14. Sitz (10) nach Anspruch 13, wobei sich das Rückenstützgitter (28) durch eine Öffnung in der Rückenlehne (16) erstreckt, wobei das Rückenstützgitter (28) in Abhängigkeit von einer der Vielzahl von Positionen verstellbar ist.

15. Sitz (10) nach Anspruch 12, wobei in der Essposition in Bezug auf einen Boden (32), auf dem der Sitz (10) angeordnet werden soll:
sich die Rückenlehne (16) in einem Winkel von etwa 90° ± 5° in Bezug auf den Boden (32) befindet und
sich die Sitzfläche (14) in einem Winkel von etwa 0° ± 5° in Bezug auf den Boden (32) befindet.

16. Sitz (10) nach Anspruch 2, wobei in der TTOL-Position in Bezug auf einen Boden (32), auf dem der Sitz (10) angeordnet werden soll:
sich die Rückenlehne (16) in einem Winkel von etwa 70° ± 5° in Bezug auf den Boden (32) befindet und
sich die Sitzfläche (14) in einem Winkel von etwa -5° ± 5° in Bezug auf den Boden (32) befindet.

17. Sitz (10) nach Anspruch 12, wobei in der Schlafposition in Bezug auf einen Boden (32), auf dem der Sitz (10) angeordnet werden soll:
sich die Rückenlehne (16) in einem Winkel von etwa 46° ± 5° in Bezug auf den Boden (32) befindet und
sich die Sitzfläche (14) in einem Winkel von etwa -15° ± 5° in Bezug auf den Boden (32) befindet.

18. Sitz (10) nach Anspruch 2, wobei in der Liegeposition in Bezug auf einen Boden (32), auf dem der Sitz (10) angeordnet werden soll:
sich die Rückenlehne (16) in einem Winkel von etwa 0° ± 5° in Bezug auf den Boden (32) befindet und
sich die Sitzfläche (14) in einem Winkel von etwa 0° ± 5° in Bezug auf den Boden (32) befindet.

## Revendications

1. Siège (10) pour un véhicule, comprenant :
un fond de siège (14), possédant un bord avant de fond de siège et un bord arrière de fond de siège ; un dossier (16), possédant un bord supérieur de dossier et un bord inférieur de dossier, ledit bord inférieur de dossier étant disposé de manière articulée adjacent au bord arrière de fond de siège, et au moins l'un du fond de siège (14) et du dossier (16) pouvant être configuré dans une pluralité de positions ;
un châssis de roulement (20) supportant le fond de siège (14), le châssis de roulement (20) comprenant des supports latéraux gauche et droit espacés ; et
un treillis de support de dos (28) disposé adjacent au dossier (16) destiné à fournir un support de dos,
une commande pouvant être actionnée par un passager du siège (10) destinée à définir un degré initial de support de dos fourni par le treillis de support de dos (28) ;
ledit treillis de support de dos (28) étant fonctionnellement raccordé à au moins l'un du fond de siège (14) et du dossier (16), et
ledit support de dos fourni par le treillis de support de dos (28) étant automatiquement réglable à partir du degré initial de support de dos en fonction de la pluralité de positions, **caractérisé en ce que** le siège (10) comprend en outre un élément de liaison basculant (66) raccordé de manière fonctionnelle, au niveau d'une extrémité supérieure de l'élément de liaison basculant, à au moins l'un du dossier (16) et du fond de siège (14) et, au niveau d'une extrémité inférieure d'élément de liaison basculant, au châssis de roulement (20), l'élément de liaison basculant (66) étant une plaque en forme de S en vue latérale entre l'extrémité supérieure de l'élément de liaison basculant et l'extrémité inférieure de l'élément de liaison basculant.

2. Siège (10) selon la revendication 1, ladite pluralité de positions comprenant au moins une position de roulage, de décollage et d'atterrissage (TTOL) et une position couchée.

3. Siège (10) selon la revendication 2, ledit degré initial de support de dos fourni par le treillis de support de dos (28) étant défini lorsque le siège (10) est dans la position de roulage, de décollage et d'atterrissage (TTOL).

4. Siège (10) selon la revendication 1, un degré de support de dos fourni par le treillis de support de dos (28) étant différent pour chacune de la pluralité de positions.

5. Siège (10) selon la revendication 4, ledit degré de support de dos fourni par le treillis de support de dos (28) dans chacune de la pluralité de positions étant réglé sur la base du degré initial de support de dos défini par le passager.

6. Siège (10) selon la revendication 2, ledit treillis de support de dos (28) fournissant moins de support de dos en position couchée qu'en position de roulage, de décollage et d'atterrissage (TTOL).

7. Siège (10) selon la revendication 2, ledit treillis de support de dos (28) fournissant une configuration renflée qui s'étend vers l'extérieur à partir du siège (10) dans la position TTOL.

8. Siège (10) selon la revendication 7, ledit treillis de support de dos (28) changeant de forme avec chacune de la pluralité de positions.

9. Siège (10) selon la revendication 4, un mécanisme de support de dos (30) réglant progressivement la courbure du treillis de support de dos (28) et modifiant ainsi le degré de support de dos fourni par le treillis de support de dos (28) tandis qu'un angle entre le dossier (16) et le fond de siège (14) change.

10. Siège (10) selon la revendication 1, comprenant en outre :
un appui-tête (18), possédant un bord supérieur d'appui-tête et un bord inférieur d'appui-tête, ledit bord inférieur d'appui-tête étant disposé adjacent au bord supérieur de dossier.

11. Siège (10) selon la revendication 1, comprenant en outre :
un pivot (22) supportant le châssis de roulement (20) ; et
un cadre de rail (24) supportant le pivot (22),
ledit pivot (22) permettant au châssis de roulement (20) de tourner par rapport au cadre de rail (24).

12. Siège (10) selon la revendication 2, ladite pluralité de positions comprenant en outre une position de repas et une position de sieste.

13. Siège (10) selon la revendication 1, ledit treillis de support de dos (28) étant incorporé dans le dossier (16).

14. Siège (10) selon la revendication 13, ledit treillis de support de dos (28) s'étendant à travers une ouverture dans le dossier (16), le treillis de support de dos (28) étant réglable en fonction de l'une de la pluralité de positions.

15. Siège (10) selon la revendication 12, dans la position de repas, par rapport au sol (32) sur lequel le siège (10) doit être disposé :
ledit dossier (16) étant à un angle d'environ 90° ± 5° par rapport au sol (32), et ledit fond de siège (14) étant à un angle d'environ 0° ± 5° par rapport au sol (32).

16. Siège (10) selon la revendication 2, dans la position TTOL, par rapport au sol (32) sur lequel le siège (10) doit être disposé :
ledit dossier (16) étant à un angle d'environ 70° ± 5° par rapport au sol (32) et ledit fond de siège (14) étant à un angle d'environ -5° ± 5° par rapport au sol (32).

17. Siège (10) selon la revendication 12, dans la position de sieste, par rapport au sol (32) sur lequel le siège (10) doit être disposé :
ledit dossier (16) étant à un angle d'environ 46° ± 5° par rapport au sol (32), et ledit fond de siège (14) étant à un angle d'environ -15° ± 5° par rapport au sol (32).

18. Siège (10) selon la revendication 2, dans la position couchée, par rapport au sol (32) sur lequel le siège (10) doit être disposé :
ledit dossier (16) étant à un angle d'environ 0° ± 5° par rapport au sol (32), et ledit fond de siège (14) étant à un angle d'environ 0° ± 5° par rapport au sol (32).
